# EUROPEAN PATENT APPLICATION

(11) **EP 1 580 663 A1**
(43) Date of publication of application: **28.09.2005**
(21) Application number: 03775042.9
(22) Date of filing: 13.11.2003
(51) Int. Cl.: G06F 12/00

(54) **A METHOD FOR REALIZING SECURITY DATA STORAGE AND ALGORITHM STORAGE BY MEANS OF SEMICONDUCTOR MEMORY DEVICE**

(30) Priority: 13.11.2002 CN 02151984
(71) Applicant: Netac Technology Co., Ltd., Guangdong 518057 (CN)
(72) Inventor: DENG, G., China Academie of Science & Tech. Devel., Dist., Shenzhen, Guandong 518057 (CN); CHENG, X., China cademy of Science & Tech Develop., Dist., Shenzhen, Guandong 518057 (CN); XIANG, F., China Academie of Science & Tech. Dev., Dist., Shenzhen, Guangdong 518057 (CN)
(74) Representative: Ebner von Eschenbach, Jennifer
(86) International application number: PCT/CN2003/000963
(87) International publication number: WO 2004/044751

(57) **Abstract**

A method of realizing data security storage and algorithm storage by means of semiconductor memory device employs high level security memory technology, while provides users' data transmission storage. Further, the invention provides an open application interface to support writing and invoking user self-defined algorithm. The invention also comprises dual password management, setting multiple management authorities, and database controls, randomly encrypting and anti-falsifying technology, etc. In view of the prior art, the invention has the following technical effects, such as, realizing storage of common data and storage of data to be protected and/or algorithm at the same time; thereby greatly increasing the security of data storage, such that the method can be broadly applied to information safety field, such as software copyright protection, online banking, social insurance and medical insurance, online identification, electronic transaction, digital certificates, business and tax administration, etc.

## Description

### TECHNICAL FIELD

The present invention relates to a method of data storage, and more particularly to a method for realizing data security storage and algorithm storage by means of semiconductor memory device.

### BACKGROUND ART

With the rapid development of computer technology, removable storage technology and removable storage products have also developed rapidly. Comparing with magnetic storage floppy disks, there are many improvements in size, capacity, and speed, etc. With the popularization of Internet and rapid development of electronic commerce, people have paid more and more attention to encrypting process of stored information and limiting users' certification. For instance, Chinese Patent Application No. 01114762.8, entitled "Semiconductor Memory Device", discloses a semiconductor removable memory device having functions of user certification and data encryption and decryption, thereby verifying and certifying the identity of the user using the semiconductor memory device, encrypting the information stored in the semiconductor memory device and decrypting the encrypted information when it is read out. However, such user certification and data encryption technology are quite simple, and the level thereof is very low. Thus, it is easy to be decrypted. It cannot meet the requirement of data security storage.

With the development of Internet, the method of on-line payment adopted for electronic transaction has been rapidly developed, and become focus of profit growth and competition of commercial banks and security companies. Therefore, the security of network systems has become more and more important and become major concern. People not only worry about prevention of hackers' attack through Internet from time to time, but also worry about transactional password to be stolen so that the identity of online electronic transaction may be illegally used by others. There are a variety of products of information encryption keys. Most of the known information keys are portable products having a single built-in user cipher key code and special algorithm program, and can be connected with universal peripheral interfaces of computers and electronic information devices, etc. thereby providing the functions of certifying the identities of users, such as the "Information Key" disclosed in Chinese Utility Model Patent No. ZL01232435.3. Although the information key may realize verification and certification of user's identity through the single built-in user cipher key, it has the following disadvantages, such as, likelihood of being decrypted and incompatibility of user's self-defined algorithm so that the use thereof is rather limited. It cannot meet the requirement of protection for certifying the authenticated software, and it neglects the users' requirement of data storage.

### SUMMARY OF THE INVENTION

A technical problem to be resolved by the present invention is to improve the disadvantage of encrypting technology in the prior art. The present invention provides a method of realizing data security storage by means of semiconductor memory device to support the high security of user's mobile data storage so as to increase greatly the difficulty of decryption or leakage of the data of legal users, thereby increasing greatly the security of the data stored by users.

Another technical problem to be resolved by the present invention is to provide a method of realizing algorithm storage by means of semiconductor memory device to support the writing and internal execution of user's self-defined algorithm, and to return the result of operation thereof. It can be used broadly in the field of information security, such as, certification of identity and software copyright protection, etc.

The technical problem of the present invention will be solved by the following technical solution of designing a method for realizing data security storage by means of semiconductor memory device that comprises a semiconductor memory device. The semiconductor memory device comprises a controller module, and a universal interface module and a semiconductor storage medium module that are electrically connected with the controller module, respectively. The method of data security storage comprises the steps of:
□ dividing the semiconductor storage medium module into at least two logic memory spaces;
□ at least one of the logic memory spaces being used for storing the data to be protected;
□ setting up and storing password for the semiconductor memory device and /or at least one of the logic memory spaces;
□ verifying or certifying password before the reading /writing operation;
□ when writing the data to be protected into the semiconductor memory device, the controller module receiving the data from the universal interface and, after encryption of the data, storing it in the semiconductor storage medium module; and
□ when reading out the data to be protected from the semiconductor memory device, the controller module decrypting the data and transmitting the decrypted data through the universal interface.

Further, the technical problem of the present invention is resolved by the technical solution of designing a method for realizing algorithm storage by means of semiconductor memory device that comprises a semiconductor memory device. The semiconductor memory device comprises a controller module, and a universal interface module and semiconductor storage medium module that are electrically connected with the controller module, respectively. The method of algorithm storage comprises the steps of:
□ dividing the semiconductor storage medium module into at least two logic memory spaces;
□ at least one of the logic memory spaces being used for storing algorithm;
□ the controller module receiving the input data from the universal interface;
□ the controller module executing the designated algorithm according to the input data, and transmitting the operation result through the universal interface.

The method of the present invention realizes data security storage and algorithm storage by means of semiconductor memory device, and is designed with a dual password management, and with setting multiple management authorities , as well as database control, random encryption and anti-modification techniques, etc.

The present invention employs a high level security storage technique while providing users with removable data storage. Further, the present invention provides an open application interface to support writing and invoking of user's self-defined algorithm. In view of the prior art, the present invention has the following technical effects, that is, it can realize the functions of storing common data and data to be protected and/or algorithm at the same time, thereby greatly increasing the security of data storage, and being widely applicable in the field of information safety, such as copyright protection of software, online banking, online purchasing, social and medical insurance, verification or certification of personal identity and web identity, electronic commerce, digital certification, business administration, as well as tax administration, etc.

### BRIEF DESCRIPTION OF THE DRAWINGS:

Fig.1 is a principle diagram of the method for realizing data security storage and algorithm storage by means of semiconductor memory device according to the present invention;
Fig. 2 is a structural schematic diagram of the semiconductor memory device for realizing the method of data security storage and algorithm storage according to the present invention;
Fig. 3 is a flow chart showing prevention of data modification during transmitting or storing the data according to the method of data security storage of the present invention;
Fig. 4 is a flow chart showing prevention of data modification during receiving or reading data according to the method of data security storage of the present invention;
Fig. 5 is a flow chart of data transmission using encryption with session key according to the method of data security storage of the present invention;
Fig. 6 is a flow chart of software execution of the method of data security storage and algorithm storage according to the present invention for software copyright protection;
Fig. 7 is a flow chart of invoking user's self-defined algorithm of the method of data security storage and algorithm storage according to the present invention for software copyright protection;
Fig. 8 is a flow chart of multiple module management of the method of data security storage and algorithm storage according to the present invention for software copyright protection;
Fig. 9 is a structural schematic diagram of the semiconductor memory device shown in Fig. 2 having a USB interface and flash memory;
Figs. 10-A, B and C are schematic circuit diagrams of the semiconductor memory device shown in Fig. 9 having a USB interface and flash memory.

### DETAIL DESCRIPTION OF THE PREFERRED EMBODIMENTS

The preferable embodiments will be further described in connection with the accompanying drawings.

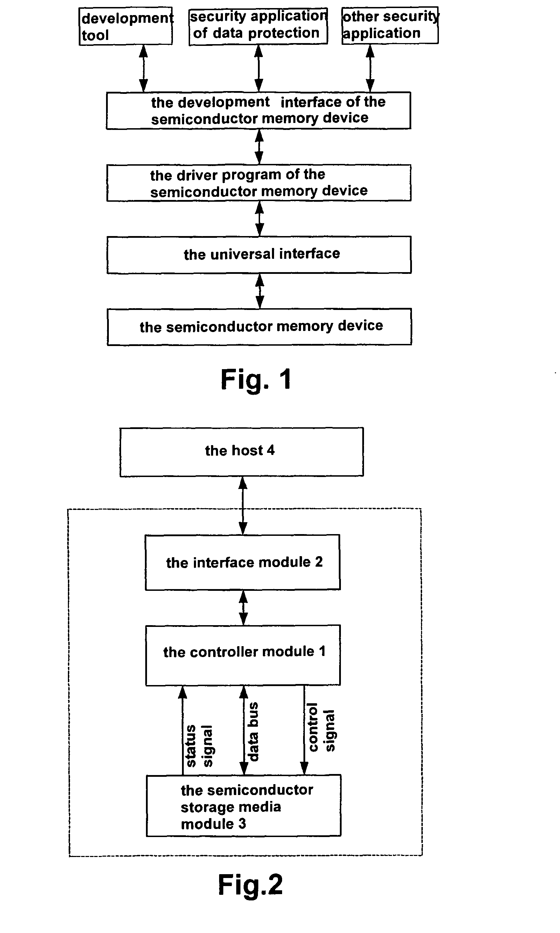

The present invention provides a method for realizing data security storage and algorithm storage by means of semiconductor memory device, as shown in Fig. 1, to realize a variety of security applications by way of connecting the development interface provided by the present invention to the driver program of the semiconductor memory device relating to operating system, and by way of interaction of the driver program of the semiconductor memory device via the universal interfaces and the semiconductor memory device connected on the interfaces.

The present invention utilizes a semiconductor memory device to realize the method of data security storage, as shown in Fig. 2, comprising a semiconductor memory device. The semiconductor memory device comprises a controller module **1,** and a universal interface module **2** and semiconductor storage medium module **3** that are electrically connected with the controller module **1** respectively. The method of data security storage comprises the steps of:
□ dividing the semiconductor storage medium module 3 into at least two logic memory spaces;
□ at least one of the logic memory spaces being used for storing the data to be protected;
□ setting up and storing password for the semiconductor memory device and/or at least one of the logic memory spaces;
□ verifying or certifying password before the operation of reading/writing;
□ when writing the data to be protected into the semiconductor memory device, the controller module **1** receiving the data from the universal interface **2** and, after encryption of the data, storing the data in the semiconductor storage medium module **3;** and
□ when reading out the data to be protected from the semiconductor memory device, the controller module **1** decrypting the data and transmitting the decrypted data via the universal interface **2.**

The present invention utilizes a semiconductor memory device to realize the method of algorithm storage, as shown in Fig. 2, comprising a semiconductor memory device. The semiconductor memory device comprises a controller module **1,** and a universal interface module **2** and a semiconductor storage medium module **3** that are electrically connected with the controller module 1 respectively. The method of algorithm storage comprises the steps of:
□ dividing the semiconductor storage medium module **3** into at least two logic memory spaces;
□ at least one of the logic memory spaces being used for storing the algorithm;
□ the controller module **1** receiving the input data from the universal interface **2;**
□ the controller module **1** executing the designated algorithm according to the input data, and transmitting the operation result via the universal interface **2.**

For the semiconductor memory device of the present invention, please refer to Chinese Patent no. ZL99117225.6, entitled "Method and Apparatus Of Flash Electronic Memory For Data Processing System". This Patent discloses a semiconductor memory device using a flash memory as storage medium to realize the removable storage of massive data based on the universal interface of USB, IEEE1394, etc. The application thereof has become more and more popular.

The universal interface **2** is an interface connecting the semiconductor memory device and data processing system, and also a communication interface for realizing a variety of security applications of the present invention. The universal interface may be wired universal interface or wireless universal interface, such as serial interface, parallel interface, USB interface, IEEE1391 interface, Bluetooth interface, IrDA infrared interface, HomeRF interface, IEEE802.11a interface or IEEE802.11b interfaces.

The semiconductor storage medium module **3** may be divided into at least two logic memory spaces, wherein at least one of logic memory spaces is used for storing the data to be protected, at least one of the logic memory spaces is used for storing the data not to be protected. The semiconductor storage medium module **3** may be a kind of storage medium, or a combination of at least two kinds of storage media. The semiconductor storage medium include, but not limited to, flash memory, DRAM, EEPROM, SRAM, FRAM, MRAM or Millipede, and it may use one or more pieces of semiconductor chips. The logic memory spaces of the semiconductor storage medium module **3** may be established in one storage medium, or in at least two storage media. The data to be protected as stored in at least one logic memory space include, but not limited to, documents, passwords, cipher keys, account numbers, digital certificates, encrypted algorithm, self-defined algorithm, users' information and/or users' self-defined data.

The semiconductor memory device obtains power supply from the universal interface through its connection with the data processing system. When the universal interface **2** is a wireless universal interface, the memory device may carry power supply itself or obtain power supply from an external power source. At present, there are lots of references relating to power supplies for semiconductor memory devices, and thus it will not be described in details herein.

The controller module **1** is a core control module of the semiconductor memory device, and the controller module **1** is provided with built-in firmware. The primary functions of the firmware are:
a) controlling the data communication and data reading and writing between the semiconductor memory device and data processing system through the universal interface;
b) receiving control information and/or operation request from the data processing system, and executing the corresponding operation according to the control information and /or operation request;
c) executing a variety of built-in or users' self-defined algorithms, and returning operation result;
d) invoking pre-defined data encryption-decryption system to encrypt or decrypt the date stored by the user so as to realize security storage of users' data;

The firmware in the controller module **1** also provides open application development interface. By dynamic link provided by the application development interface, the user may develop stronger applications, such as, a variety of security encryptions, personal identifications, copyright protections, etc. on the basis thereof. The firmware in the controller module **1** also provides uniform input output parameters for users' self-define algorithms and functions, and therefore it is possible to let the users to define much stronger algorithms.

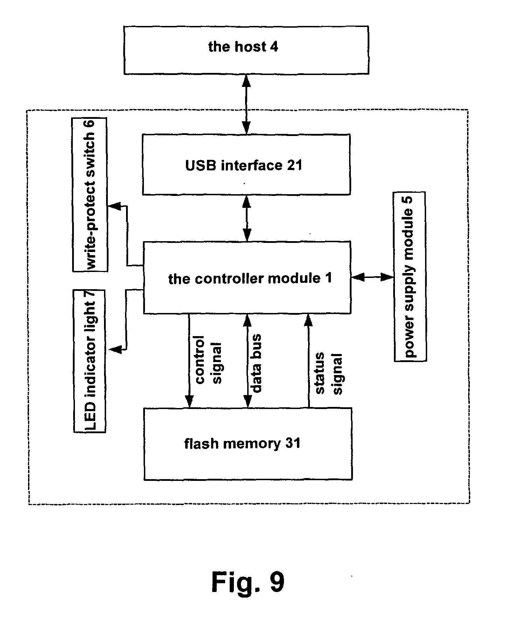

As shown in Fig. 9, the semiconductor memory device uses a USB interface and flash memory, and it comprises a controller module **1,** a flash memory module **31** and a USB interface module **21.** The flash memory module **31** and USB interface module **21** connect electrically with the controller module **1,** respectively. The semiconductor memory device further comprises a power supply module **5,** write-protection switch **6** and status indication module **7.**

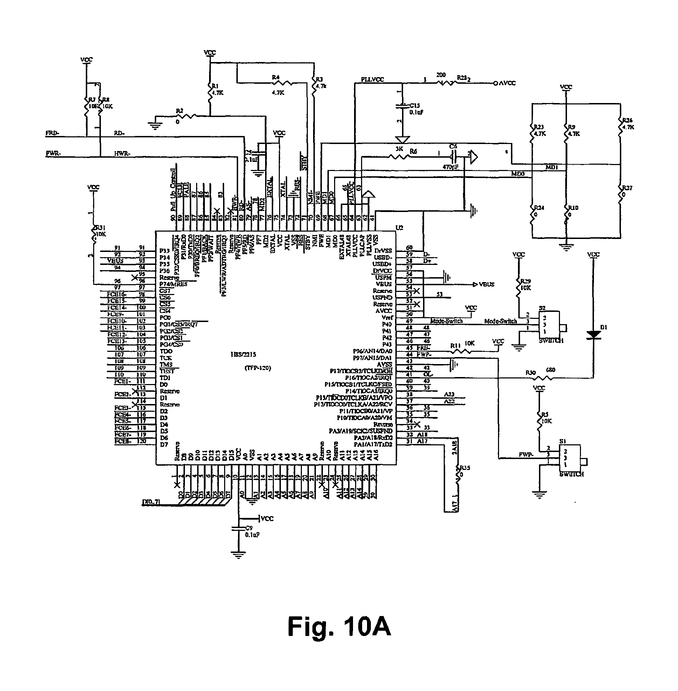

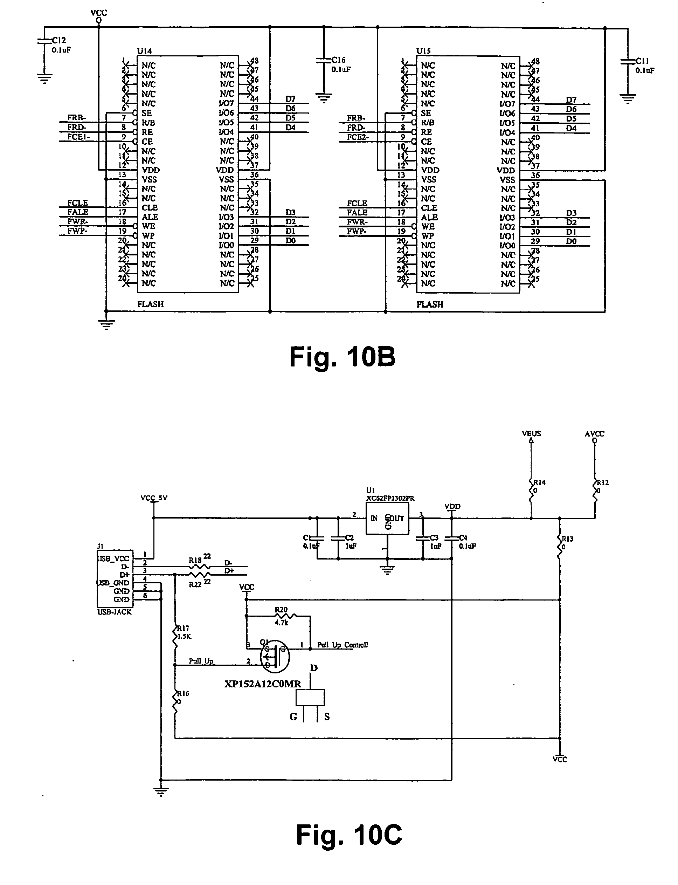

Figs. 10-A, B and C are schematic circuit diagrams of the semiconductor memory device. In Fig. 10-A, the controller module **1** uses H8S2215 MCU of Hitachi Company as main controller. H8S2215 chip provides 64K ROM, 8K RAM, 16Bit clock frequency, and runs in high speed. **S1** is a write-protection switch. When **S1** turns the pin connecting FWP-signal to "0" level, the semiconductor memory device is in write-protection condition, allowing read, but write operation. Otherwise, it is in normal read-and-write condition. The status indication uses LED indicator **D1,** and GL is a control signal of the indicator. **D1** flashes when the semiconductor memory device is in the operation of reading, writing, and deleting, etc., otherwise, **D1** is constantly light up. The flash memory module **31,** as shown in Fig. 10-B, comprises two NAND flash memory chips **U14** and **U15,** wherein D0~D7 are data bus, and control signals include FALE, FCLE, FWR-, FRD-, FCE1-, FCE2- for connecting, respectively, with the corresponding ends of the H8S2215 chip. Status signals include FWP-, FRB-, and connect, respectively, with the corresponding ends of the H8S2215 chip. As shown in Fig. 10-C, the universal interface module **2** may use USB interface, and the semiconductor memory device obtains power supply from the USB bus of the data processing system, wherein **U1** and its peripheral elements form the power supply circuit for the whole system.

How the present invention utilizes the semiconductor memory device to realize method of data security storage will be further described hereinafter.

The method of the present invention for realizing data security storage by means of semiconductor memory device supports multiple levels of passwords and multiple levels of authority management for the data to be protected. The data to be protected stored in the at least one logic memory space of the semiconductor memory device include, but not limited to, documents, passwords, cipher keys, account numbers, digital certificates, encrypted algorithms, self-defined algorithms, user information and/or user self-defined data. The data to be protected is encrypted with special encrypting algorithm, and cannot be read out correctly and efficiently without correct encrypting cipher key.

The method of data security storage of the present invention sets up at least two levels of users passwords for the semiconductor memory device, i.e., passwords for high level administrators and normal passwords for users. In order to realize strengthened management of data storage, the present invention may set up multiple levels of users passwords to realize management of multiple users. The method of data security storage of the present invention may just set up two levels of passwords only for one or more logic memory spaces of the semiconductor storage medium module.

In order to protect the data security, it is necessary to verify the user password before read-and-write operation of the semiconductor memory device. Verification of the user password may be conducted before the operation in all of the logic memory spaces. It may also be conducted only before the operation in the logic memory spaces storing the data to be protected. Any user may conduct any operation in the logic memory spaces for storing data that do not need protection. The verification of the user's password may be conducted once after the semiconductor memory device is turned and is initialized, and then it does not need to verify the user password during any operation in the semiconductor memory device until the semiconductor memory device is pulled off. It may also verify the user's password before each of read/write operation in the semiconductor memory device. It may also verify the user's password at intermittently or randomly before the read/write operation in the semiconductor memory device.

In order to realize classified data storage the method for realizing data security storage by means of semiconductor memory device according to the present invention adopts design principle and concept of data storage of database, establishes database, and manages access and/or authority for the data to be protected in the way of database management.

In order to classify and organize the data, high level administrators and normal users may set up their own databases, and designate whether it is necessary to encrypt the records of the databases during establishment of the databases. Meanwhile, they may also designate the authorities for accessing the databases during database setting up.

At the time of the databases establishment, it is possible to designate reading, writing, modifying, deleting and executing authorities. The meaning of each authority is as follows:
Reading authority: It only allows reading the recorded data in the database.
Writing authority: It only allows writing new data into the database, but it cannot cover the recorded data of the same record title.
Modifying authority: It only allows writing the data in the database to cover the recorded data with the same record title.
Deleting authority: It allows deleting the database or the records therein.
Executing authority: It can execute the record code in the database, and it is an authority only for written data of self-defined algorithm or function codes, but it is invalid to designate executing authority for normal record data.

In order to control secured access to the data to be protected, normal user has only the access authority designated by the high level administrator for accessing for the database established by high level administrator. The normal user cannot set up database which has already been set up by the high level administrator.

When the data to be protected is written in the semiconductor memory device with the method of data security storage of the present invention, the controller module **1** receives the data to be protected from the universal interface **2,** and then, after encryption, stores the data in at least one logic memory space of the semiconductor storage media module **3.** The protected data may be stored after being encrypted with a normal user password or with data as cipher key obtained after converting the normal user password with encrypting algorithm. If the high level administrator wants to access correctly the data to be protected, it must verify the normal user password so as to ensure the secrecy of the data written by the normal user. Likewise, the high level administrator must verify the normal user password so as to obtain the encrypting cipher key to encrypt the database when writing the data to be protected. Otherwise, the written data is just a data without being encrypted. When the data to be protected is read out from the semiconductor memory device, the controller module **1** may decrypt the data to be protected according to the cipher key obtained by certifying the normal user password, and transmit the decrypted data through the universal interface **2.**

The high level administrator has the highest control power to all databases. For the database set up by normal user, the high level administrator may also read, write, delete, modify and execute the data even without verification of the normal user password. However, the read, written, modified data cannot be correctly encrypted/decrypted without encrypting cipher key, whereby the data cannot be read correctly.

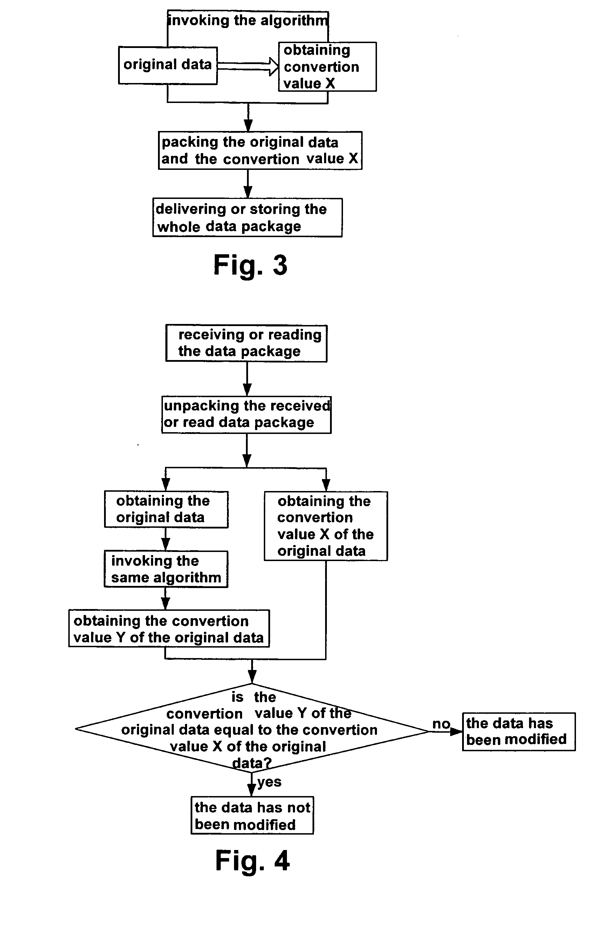

In the information security field, the method a violator usually uses to gain illegal access of data is tracking down the change of the data, finding rules and changing the operating code. In order to protect the data in transmission and /or stored data from being illegally falsified, the method of data security storage of the present invention has such design that may identify whether the data is falsified. According to the requirement of data security, it can identify all of the data to be protected against possible falsification, and it can also just identify certain transmitted and/or stored key data against any possible falsification. The anti-falsification identification of the transmitted and/or stored data, as shown in Figs. 3 and 4, is carried out as follows:
When transmitting or storing the data, as shown in Fig. 3, it comprises the following steps of:
   A. invoking encrypting algorithm to convert original data to obtain conversion value X;
   B. packing the original data and the conversion value X according to certain format to form data package; and
   C transmitting or storing the whole data package.
When receiving or reading the data, as shown in Fig. 4, it comprises the following steps of:
   A. unpacking the data package according to the aforesaid same format to obtain the original data and the conversion value X of the original data;
   B. invoking the encrypting the aforesaid same algorithm to calculate the conversion value of the original data to obtain conversion value Y;
   C. comparing the calculated conversion value Y and the received conversion value X to see whether they are equal to each other; and
   D. if compared results equal, the data has not been falsified, and otherwise the data has been falsified.

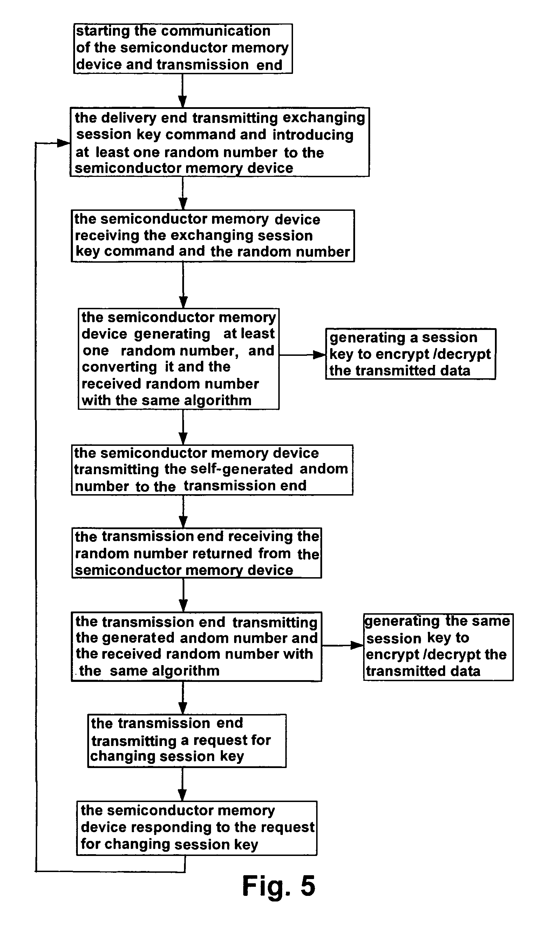

In order to prevent the data from being intercepted during transmission, the method of data security storage of the present invention uses changeable session key to encrypt the data during the data exchange between the semiconductor memory device and the data processing system in addition to the anti-falsification design, as shown in Fig. 5, and it performs as follows:
A. at the beginning of data transmission, transmission end transmits a command of exchanging session key and introduces at least one random number at the same time;
B. after receiving the command of exchanging session key, the semiconductor memory device creates randomly at least one random number, converting the received random number and the created random number by an algorithm to produce the session key, and then returning the random number created by the semiconductor memory device to the transmission end;
C. after receiving the returned random number, the transmission end converts the received random number and the random number introduced by the transmission end itself with the same algorithm to produce the session key.

The session key may be used as encrypting/decrypting cipher key to transmit the data to be protected between the data processing system and the semiconductor memory device. The session key can be changed at any time according to the request of changing the session key transmitted by the transmission end so as to ensure the secured transmission of the data to be protected.

The method for realizing algorithm storage by means of semiconductor memory device according to the present invention will be further described hereinafter.

In the method for realizing algorithm storage by means of semiconductor memory device according to the present invention, the semiconductor storage media module **3** is divided into at least two logic memory spaces, wherein at least one logic memory space is for algorithm storage. The controller module **1** may execute the designated algorithm according to input data from the universal interface **2** and send out the operation result via the universal interface **2.**

In the method of algorithm storage of the present invention, the algorithm may be stored in at least one logic memory space of the semiconductor storage medium module **3.** It may use the method of data security storage of the present invention to store the algorithm, setting up at least two levels of user passwords and multiple levels of authority management, and using anti-falsification and session key designs. The stored algorithm may be one or more algorithms, and may be built-in algorithm in the semiconductor memory device; or self-defined algorithm written into by the user through the application interface.

According to the algorithm storage method of the present invention, the controller module **1** may execute the designated algorithm according to input data from the universal interface **2** and transmit the operation result via the universal interface **2.** The controller module **1** may read out at least one algorithm from the semiconductor storage medium module **3** and load it to the controller module **1,** and then select at least one algorithm according to the algorithm invoking parameter received from the universal interface **2** and execute the algorithm inside of the controller, and then return operation result via the universal interface **2.** Alternatively, the controller module **1** may select at least one algorithm according to the algorithm invoking parameter received from the universal interface **2,** and then read out the algorithm from the semiconductor storage medium module **3** and load it to the controller module **1,** and then execute the algorithm inside of the controller and return operation result via the universal interface **2.**

The method for realizing data security storage and algorithm storage by means of semiconductor memory device according to the present invention will be further described hereinafter, talking software copyright protection as an example.

The method of data security storage and algorithm storage of the present invention provides the user with an open application interface to support writing and invoking of the user self-defined algorithm. In order to realize software copyright protection, the method of data security storage and algorithm storage of the present invention may provide software developer with the usual development interfaces as follows:
1) initializing the semiconductor memory device:
   DWORD NetacOD_Init(OD_INFO *odInfo);
2) quitting from the semiconductor memory device:
   DWORD NetacOD_Exit();
3) verifying or certificating the normal user password:
   DWORD NetacOD_AuthUserPwd(unsigned char pwd[17], int odIndex = 1);
4) verifying or certificating the high level administrator password:
   DWORD NetacOD_AuthAdminPwd(unsigned char pwd[17], int odIndex = 1);
5) creating the user database:
   DWORD NetacOD_CreateUserDB(unsigned char DBType, unsigned char bEncrypt, unsigned char bAccess, unsigned char *DBId, int odIndex = 1);
6) opening the database:
   DWORD NetacOD_OpenUserDB(unsigned char DBType, unsigned char bAccess, unsigned char *DBId, int odIndex = 1);
7) deleting the database:
   DWORD NetacOD_DeleteUserDB(unsigned char DBID,int odIndex = 1);
8) closing the database:
   DWORD NetacoD_CloseUserDB(unsigned char DBID,int odIndex = 1);
9) writing the user data into the database:
   DWORD NetacOD_WriteUserData(unsigned char DBID, unsigned char dataID[9], unsigned char *data, unsigned short dataLen, int odIndex = 1);
10) deleting certain record from the database:
   DWORD NetacOD_DeleteUserData(unsigned char DBID, unsigned char dataID[9], bool bIsIndexNo = FALSE, int odIndex = 1);
11) reading the establishing mark record from the database:
   DWORD NetacOD_ReadUserData(unsigned char DBID, unsigned char dataID[9], unsigned char *data, unsigned short *dataLen, bool bIsIndexNo = FALSE, int odIndex = 1);
12) writing in software module data:
   DWORD NetacOD_WriteModuleData(unsigned char moduleID, unsigned char moduleAttr, unsigned short moduleUseCounter, unsigned short moduleUserCounter=1, int odIndex = 1);
13) reading out software module data:
   DWORD NetacOD_ReadModuleData(MODULE_INFO *moduleInfo, int odIndex = 1);
14) decreasing usage time set up by certain software module:
   DWORD NetacOD_DecreaseCounter(unsigned char moduleID,int odIndex = 1);
15) writing in self-defined algorithm and function:
   DWORD NetacOD_WriteFunction(unsigned char functionName[9], unsigned char* functionData, unsigned short functionDataLen, int odIndex = 1);
16) invoking self-defined algorithm and function:
   DWORD NetacOD_CallFunction(IN_PARAM* functionInParameter, OUT_PARAM* functionOutParameter, int odIndex = 1);
17) invoking hashing algorithm:
   DWORD NetacOD_Hash(IN PHASH_PROPERTY pHashProperty, IN PBYTE pInBuffer, IN WORD wInBufferLen, IN OUT PBYTE pOutBuffer, IN OUT PWORD pOutBufferLen);
18) encrypting:
   DWORD NetacOD_Encrypt(IN WORD wBitLen, IN BYTE bAIgId, IN PBYTE pKey, IN PBYTE pInBuffer, IN WORD wInBufferLen, IN OUT PBYTE pOutBuffer, IN OUT PWORD pOutBufferLen);
19) decrypting:
   DWORD NetacOD_Decrypt (IN WORDwBitLen, IN BYTE bAIgId, IN PBYTE pKey, IN PBYTE pInBuffer, IN WORD wInBufferLen, IN OUT PBYTE pOutBuffer, IN OUT PWORD pOutBufferLen);
20) generating cipher key:
   DWORD NetacOD_GenKey(IN PKEY_ATTRpkeyAttr, IN PKEY_SEED pKeySeed, IN OUT PBYTE pKeyBuffer);
21) changing session key: DWORD NetacOD_ChangeSessionKey();

Based on the above interface, the software developer may design and write high strength self-defined algorithm and function as invoking algorithm of copyrighted software protection, and then compile it into executing code specially adopted for the semiconductor memory device, and write it in the semiconductor memory device after encrypted with the method of data security storage of the present invention to realize secured data protection in source code level.

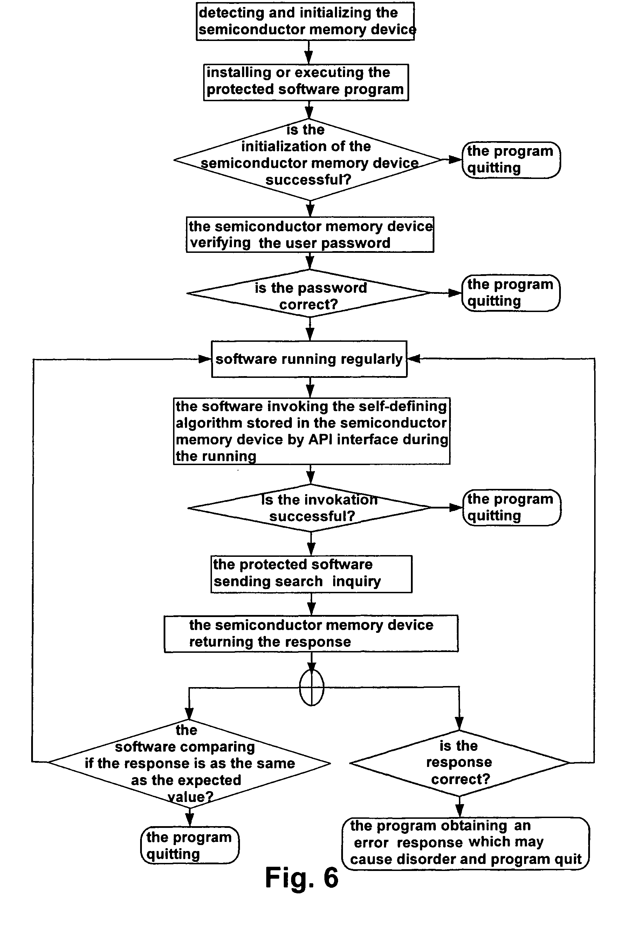

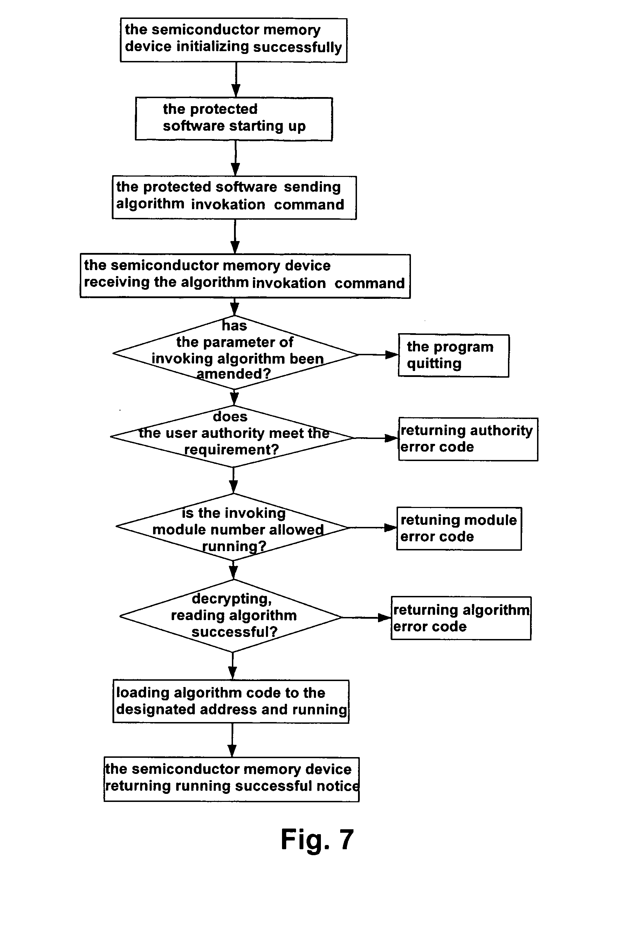

In order to prevent the semiconductor memory device from plugging off or switching off the communication (such as the connection of the Bluetooth interface) after passing authentication certification, which may give a violator a chance to track down or decipher encrypting algorithm of copyrighted software so that the copyrighted software may be used illegally, it may invoke the self-defined algorithm stored in the semiconductor memory device at random interval during operation of the copyrighted software. As shown in Figs. 6 and 7, it is realized as follows:
A. the legal software sends "algorithm invoking instruction" to the driver program of the semiconductor memory device through a simple API function invocation, and the driver program transmits automatically the "algorithm invoking instruction" to the controller module **1** of the semiconductor memory device via the universal interface;
B. the semiconductor memory device certifies whether the algorithm invoking parameter transmitted in has been falsified, and if so, quits the program operation;
C. the semiconductor memory device certifies the user access authority, and if the user does not have the access authority for self-defined algorithm database, it returns an authority error code;
D. the semiconductor memory device certifies if it is permissible to run the invoked module, and if the user does not have authority for using this module, it returns a module error code;
E. the semiconductor memory device decrypts self-defined algorithm, and if decrypting and reading is not success, it returns an algorithm error code;
F. the semiconductor memory device loads the algorithm code written by the user to a designated address through the controller module **1** and runs it, and then returns a notice of operation success to the driver program of the semiconductor memory device through the universal interface;
G. the driver program returns the notice of operation success to the API function invocation in the software;
H. when the legal software receives the notice of algorithm invoking operation success, it transmits an "inquiry command" to the semiconductor memory device, and the semiconductor memory device returns a reply result created by the current user self-defined algorithm; and
I. the protected software conducts corresponding processes according to the returned reply result.

According to the difference of the invoked algorithm, the software may conduct two different processes: in the case that reply results need comparison, if the reply result returned by the semiconductor memory device is the same as the result expected by the software, the program runs regularly; otherwise, the program quits; and in the case that the reply results do not need comparison, if the reply result returned by the semiconductor memory device is correct, the program runs regularly; otherwise the program may receive an error result which may cause disorder and the program quitting.

The above invoking process of self-defined algorithm may be circulated continuously at random interval in the entire process of software operation. If the user plugs off the semiconductor memory device or switches off the communication between the semiconductor memory device and the software, the software will not detect the semiconductor memory device, and the self-defined algorithm cannot be invoked, and thus the software program quits running. The algorithm invoked in the present invention may be certain built-in algorithm function, or self-defined algorithm written by the user through the development interface, and it may also be a part of the software program written in the semiconductor memory device after being compiled.

According to two levels of passwords and multiple levels of authority management in the method of data security storage of the present invention, the software developer, as a high level administrator, may write in advance setting information, such as invoking algorithm, software module management parameter, etc., in the semiconductor memory device, and assign respective access authorities to software users using normal user passwords. During installing and/or executing the software, the semiconductor memory device may verify normal user passwords, and assign respective access authorities to the normal users according to pre-setting of the software developer so as to control the operation in the semiconductor memory device by the terminal software users to realize control of software applications.

Large software may be generally divided into lots of modules, and each module may be used individually or in combination so as to realize a variety of functions. According to the method of data security storage of the present invention, the software developer may write module authority management database in the semiconductor memory device to meet requirement of users by setting up module parameters.

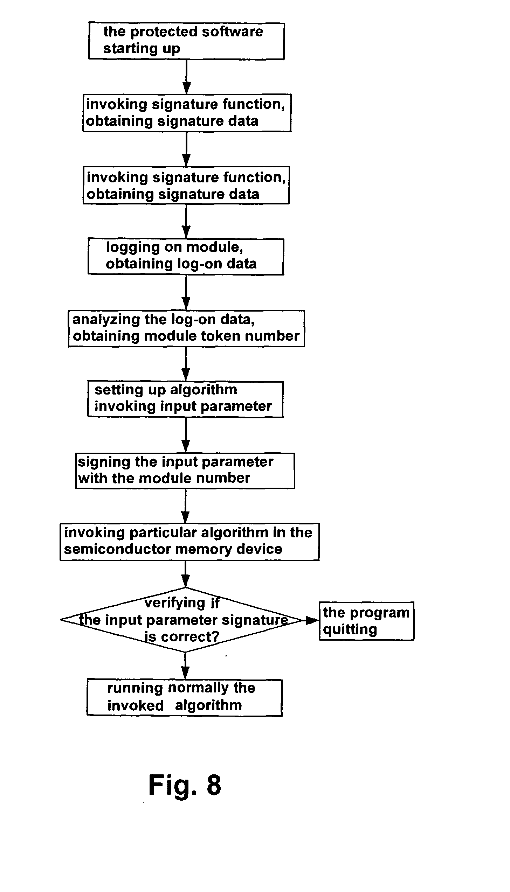

During the development of application programs for users, the software developer may set up parameters of module invoking self-defined algorithm, write module authority management of database in the semiconductor memory device, and create randomly module token number corresponding to available modules. When setting up module invoking interface in the application software to invoke self-defined algorithm, it is necessary to verify the algorithm invoking parameters signed by the module token number. Ifit is unallowed to run this module, the invocation of the self-defined algorithm fails and the user cannot use the function of this module. In order to prevent user from obtaining illegal use of the software module by changing algorithm invoking parameters, the algorithm invoking parameters may adopt the anti-falsification design of the data security storage method of the present invention during transmission. As shown in Fig. 8, the steps of realizing module management are as follows:
A. before invoking the algorithm, the legal software invoking a signature function at local in advance to obtain a signature;
B. logging on the module authority management database in the semiconductor memory device with the signature data to obtain a token number of this module;
C. invoking self-defined algorithm stored in the semiconductor memory device with the algorithm invoking parameters signed by the module token number;
D. the semiconductor memory device verifying whether the signature of the input algorithm invoking parameter is correct according to the module authority setting, i.e., determining if the algorithm invoking parameter has been falsified, and if it is correct, the algorithm invoking runs regularly to allow the legal software to execute the module; and otherwise the invocation fails, execution of the module of the legal software is refused. ,

When invoking the self-defined algorithm of the semiconductor memory device, it is available to set up a decreasing indicatorto decrease the times of usage and user number of certain modules of the legal software or the legal software itself. If the user does not successfully log on within the limited times and users, it is impossible to invoke successfully the self-defined algorithm stored in the semiconductor memory device, i.e., it is impossible to run certain modules of the legal software or the software itself. Meanwhile, in order to prevent the date from being switched off during transmission, the data may be encrypted by the encryption technology with randomly changeable session key of the method of data security storage of the present invention to further increase security during the data transmission in addition to adopting the anti-falsification design.

The method for realizing data security storage and algorithm storage by means of semiconductor memory device according to the present invention may also be broadly used in various information security fields, such as online banking, and electric transaction, etc. During transaction of online banking, the most concerned problem is the worry about transaction passwords to be stolen by others so that the online identity may be illegally acquired by the others. According to the method of data security storage of the present invention, the information about user personal information, private key, digital certificate, etc. may be stored in the semiconductor storage medium module of the semiconductor memory device, and the function of certifying identity can be realized by way of execution of the built-in algorithm by the controller module. Only the user of the semiconductor memory device is allowed to carry and use solely the device with marked identity of the user, and conduct calculation of private key, such as digital signature, etc, in the device so as to stop any leakage of information. Through the method of data security storage and algorithm storage of the present invention and the semiconductor memory device, it is possible to conduct safe and reliable transaction and payment online at any place having computers accessible to the Internet even if at consumers' home or Internet bars.

## Claims

1. A method for realizing data security storage by means of semiconductor memory device, comprising a semiconductor memory device, the semiconductor memory device comprising controller module as well as universal interface module and semiconductor storage medium module electrically connected with the controller module, respectively, **characterized in that** the method of data security storage comprises the steps of:
□ dividing the semiconductor storage medium module into at least two logic memory spaces;
□ using at least one of the logic memory spaces for storing the data to be protected;
□ setting up and storing passwords for the semiconductor memory device and said at least one logic memory space;
□ certifying the password before read/write operation;
□ when writing the data to be protected in the semiconductor memory device, the controller module receiving the data from the universal interface and, after encrypting the data, storing it in the semiconductor storage medium module; and
□ when reading the data to be protected from the semiconductor memory device, the controller module decrypting the data and transmitting the decrypted data via a universal interface.

2. The method for realizing data security storage by means of semiconductor memory device of claim 1, **characterized in that** at least one of the logic memory spaces is for storing algorithm, and the controller module executes the designated algorithm according to input data from the universal interface and transmits the operation result via the universal interface.

3. The method for realizing data security storage by means of semiconductor memory device of claim 1, **characterized in that** the semiconductor storage media module may be a storage medium, or combinations of at least two storage media.

4. The method for realizing data security storage by means of semiconductor memory device of claim 1, **characterized in that** the semiconductor memory device and/or said at least one logic memory space set up at least two levels of users passwords.

5. The method for realizing data security storage by means of semiconductor memory device of claim 4, **characterized in that** certification of user passwords may be implemented before the operation in all logic memory spaces, and it may also be implemented before the operation in the logic memory spaces storing the data to be protected.

6. The method for realizing data security storage by means of semiconductor memory device of claim 1, 4 or 5, **characterized by** setting up a database, and conducting the access and /or authority management to the data to be protected by way of the database.

7. The method for realizing data security storage by means of semiconductor memory device of claim 6, **characterized in that** the authorities comprise reading, writing, modifying, deleting and executing authorities, each authority having the meanings of:
Reading authority: only allowing reading record data in the database;
Writing authority: only allowing writing new data in the database, but not covering the record data with the same record title;
Modifying authority: only allowing writing data in the database and covering the record data with the same record title;
Deleting authority: allowing deleting the database or the records therein;
Executing authority: allowing executing record codes in the database, which is an authority with respect to written data of self-defined algorithm or function code and is normally invalid to designate executing authority for record data.

8. The method for realizing data security storage by means of semiconductor memory device of claim 1, **characterized in that** at least one of the logic memory spaces is used for storing the data that does not need protection.

9. The method for realizing data security storage by means of semiconductor memory device of claim 1, **characterized by** identifying whether the transmitted and/or stored data is falsified or not.

10. The method for realizing data security storage by means of semiconductor memory device of claim 9, **characterized in that** during transmitting or storing data, the anti-falsification identification comprises the steps of:
A. invoking encrypting algorithm to convert original data to obtain conversion value X;
B. packing the original data and the conversion value X according to certain format to form data package;
C. transmitting or storing the whole data package; and during receiving and reading the data, the method comprises the steps of:
A. unpacking the data package according to the aforesaid same format to obtain the original data and the conversion value X of the original data;
B. invoking the encrypting algorithm the same as the aforesaid one to calculate conversion value of the original data to obtain conversion value Y;
C. comparing the calculated conversion value Y and the received conversion value X to see whether they are equal to each other;
D. if the compared result is equal, indicating the data that have not been falsified, and otherwise indicating the data having been falsified.

11. The method for realizing data security storage by means of semiconductor memory device of claim 1 or 9, **characterized by** using randomly changeable session key to encrypt the data during the data transmission.

12. The method for realizing data security storage by means of semiconductor memory device of claim 11, **characterized in that** the step of using randomly changeable session key to encrypt data comprises the steps of:
A. at the beginning of the data transmission, transmission end transmitting a command of exchanging session key and introducing at least one random number at the same time;
B. after receiving the exchanging session key request, the semiconductor memory device randomly creating at least one random number, converting the received random number and the created random number by the algorithm to produce a session key, and then returning the random number created by the semiconductor memory device to the transmission end;
C. after the transmission end receives the returned random number, converting the received random number and the random number introduced by the transmission end itself with the same algorithm to produce the session key.

13. The method for realizing data security storage by means of semiconductor memory device of claim 1, **characterized in that** the data to be protected include, but not limited to, documents, passwords, cipher keys, account numbers, digital certificates, encrypting algorithm, self-defining algorithm, user information and user self-defined data.

14. A method for realizing algorithm storage by means of semiconductor memory device, including a semiconductor memory device that comprises a controller module, and a universal interface module and a semiconductor storage medium module that are electrically connected with the controller module, respectively, **characterized in that** the method of algorithm storage comprises the steps of:
□ dividing the semiconductor storage medium module into at least two logic memory spaces;
□ using at least one of the logic memory spaces for storing an algorithm;
□ the controller module receiving input data from the universal interface;
□ the controller module executing the designated algorithm according to the input data, and transmitting the operation result via the universal interface.

15. The method for realizing algorithm storage by means of semiconductor memory device of claim 14, **characterized in that** the semiconductor storage medium module may be a storage medium, or a combination of at least two storage media.

16. The method for realizing algorithm storage by means of semiconductor memory device of claim 14, **characterized in that** the algorithm is an algorithm or several algorithms

17. The method for realizing algorithm storage by means of semiconductor memory device of claim 14, **characterized in that** the algorithm is an algorithm built in the semiconductor memory device or self-defined algorithm.

18. The method for realizing algorithm storage by means of semiconductor memory device of claim 14, **characterized by** identifying whether the transmitted and /or stored data is falsified or not.

19. The method for realizing algorithm storage by means of semiconductor memory device of claim 18, **characterized in that** when transmitting or storing the data the anti-falsifying identification comprises the steps of:
A. invoking an encrypting algorithm to convert original data to obtain conversion value X;
B. packing the original data and the conversion value X according to certain format to form a data package;
C. transmitting or storing the whole data package; and during receiving or reading data the method comprises the steps of:
A. unpacking the data package according to the aforesaid format to obtain the original data and the conversion value X of the original data;
B. invoking the encrypting algorithm the same as the above one to calculate conversion value of the original to obtain conversion value Y;
C. comparing the calculated conversion value Y and the received conversion value X to see whether they are equal to each other
D. if the compared result is equal, indicating that the data has not been falsified, and otherwise indicating that the data has been falsified.

20. The method for realizing algorithm storage by means of semiconductor memory device of claim 14 or 18, **characterized by** using a randomly changeable session key to encrypt the data during the data transmission.

21. The method for realizing algorithm storage by means of semiconductor memory device of claim 20, **characterized in that** the step of using randomly changeable talking cipher key to encrypt data comprises the steps of:
A. at the beginning of data transmission, transmission end transmitting a command of exchanging talking cipher key and introducing at least one random number at the same time;
B. after receiving the exchanging session key request, the semiconductor memory device creating randomly at least one random number, converting the received random number and the created random number by the algorithm to produce a session key, and then returning the random number created by the semiconductor memory device to the transmission end;
C. after the transmission end receives the returned random number, converting the received random number and the random number introduced by the transmission end itself with the same algorithm to produce the session key.
